# EUROPÄISCHE PATENTANMELDUNG

(11) **EP 3 292 998 A1**
(43) Veröffentlichungstag der Anmeldung: **14.03.2018**
(21) Anmeldenummer: 16188261.8
(22) Anmeldetag: 12.09.2016
(51) Int. Cl.: B32B 5/02, B32B 5/18, B32B 5/20, B32B 5/24, B32B 5/26, B32B 15/04, B32B 25/04, B32B 27/06, B32B 1/00, C08J 9/00, C08J 9/32

(54) **FLÄCHENGEBILDE UND VERFAHREN ZUR HERSTELLUNG EINES SOLCHEN**

(71) Anmelder: Rieger, Eduard, 88263 Horgenzell (DE)
(72) Erfinder: Rieger, Eduard, 88263 Horgenzell (DE)
(74) Vertreter: Engelhardt, Volker

(57) **Zusammenfassung**

Bei einem Flächengebilde (1), das mindestens drei Schichten (2, 3, 4, 5, 6) aufweist, die fest miteinander zu einem Schichtaufbau (10) verbunden sind, soll ein Brandschutzelement gebildet sein, das sowohl formstabil als auch feuerfest ist bzw. brandhemmende Eigenschaften aufweist.

Dies ist dadurch erreicht, dass der Schichtaufbau (10) abwechselnd aus einem ausgehärteten Epoxydharz-Schaum (11) und einem Gewebe (12) besteht, das mit dem Epoxydharz-Schaum (11) einen Faserverbund bildet bzw. während des Aushärtens der Epoxydharz-Schaum-Schicht (11) eingeht, und dass der Schichtaufbau (10) einen Sandwich-Leichtbau aufweist, der als Feuer- oder Brandschutz geeignet ist.

## Beschreibung

Die Erfindung bezieht sich auf ein Flächengebilde nach dem Oberbegriff des Patentanspruches 1 sowie auf ein Verfahren zur Herstellung eines solchen Flächengebildes nach dem Oberbegriff des Patentanspruches 8.

Es ist bislang nicht bekannt, derartige Flächengebilde als Brandschutzelement zu verwenden. Solche Flächengebilde können nämlich ohne weiteres als Tür, als Wandverkleidungselement oder als Umhüllung für ein Rohr bzw. einen andersartig, dreidimensional ausgestalteten Körper verwendet werden, da die Flächengebilde während des Aushärtungsvorganges verformt und in eine beliebige Struktur überführt werden können.

Es ist daher Aufgabe der Erfindung, ein Flächengebilde und ein Verfahren der eingangs genannten Gattungen zur Verfügung zu stellen, durch die ein Brandschutzelement gebildet ist, das sowohl formstabil als auch feuerfest ist bzw. brandhemmende Eigenschaften aufweist.

Diese Aufgabe ist erfindungsgemäß durch die Merkmale des kennzeichnenden Teils von Patentanspruch 1 und die Herstellung eines derartigen Flächengebildes ist durch die Verfahrensmerkmale des Patentanspruches 8 gelöst.

Weitere vorteilhafte Weiterbildungen der Erfindung ergeben sich aus den Unteransprüchen.

Dadurch, dass der Schichtaufbau abwechselnd aus einem ausgehärteten Epoxydharz-Schaum und einem Gewebe besteht, das mit dem Epoxydharz-Schaum einen Faserverbund bildet bzw. während des Aushärtens des Epoxydharz-Schaumes eingeht, und dass der Schichtaufbau einen Sandwich-Leichtbau aufweist, der als Feuer- oder Brandschutz geeignet ist, entsteht ein dreidimensionales Flächengebilde mittels dem Durchgangsöffnungen in Maureröffnungen, Wände, Böden, Decken und/oder Fassaden verschlossen bzw. abgedeckt sein können, so dass das Flächengebilde eine zuverlässige und den gesetzlichen Bestimmungen entsprechende Feuer- oder Brandschutzeinrichtung in Gebäuden entspricht.

Aufgrund des verwendeten Werkstoffes Epoxydharz und des faserigen Gewebes, die eine äußerst geringes Eigengewicht aufweisen, entsteht zudem eine leicht zu handhabende und in eine beliebige Form überführbare Baueinheit als Flächengebilde, die ohne Hilfsmittel beispielsweise Kränen, Winden oder dergleichen bewegt und an die entsprechende Position montiert werden können.

Vorteilhafterweise kann das Flächengebilde aus einer Vielzahl von Schichten aus Epoxydharz-Schaum und dem textilen oder faserigen Gewebe aufgebaut sein, so dass eine beliebige dicke des Flächengebildes geschaffen werden kann. Da die einzelnen Schichten des Schichtaufbaues aus Epoxydharz-Schaum und Gewebe einen festen Faserverbund eingehen, entsteht zudem ein formstabiles, biegesteifes Flächengebilde.

Um die Feuer- und Brandschutzeigenschaften des Flächengebildes weiter zu verbessern, sind in der Epoxydharz-Schaum-Schicht Glashohlkugeln als sogenannte Pyrobubbles eingelegt. Die ausgehärtete Epoxydharz-Schaum-Schicht ist nämlich aus drei Komponenten aufgebaut, insbesondere aus Epoxydharz, einem Härter und einem Treibmittel, die unmittelbar nach dem zusammenmischen eine flüssig cremige Substanz bilden, in die die Glashohlkugeln eingelegt werden können. Während des Aushärtevorganges der derart hergestellten Substanz, zu der Epoxydharz-Schaum-Schicht werden dann die Glashohlkugeln ortsfest in dieser positioniert.

Zudem kann das Gewebe, bevor dieses auf die cremig flüssige Substanz, die anschließend die Epoxydharz-Schaum-Schicht bildet, mit einem Feuerschutzmittel imprägniert sein, so dass auch das Gewebe, feuerhemmende Eigenschaften aufweist. Es ist möglich, dass mehrere derart hergestellte Schichtaufbauten zu einem gemeinsamen Flächengebilde aufgebaut sind. Zwischen den benachbarten Schichtaufbauten soll dabei ein Freiraum entstehen, indem beispielsweise eine Akustiksteinwolle und/oder ein Brandschutzschaum eingefüllt sind, um zum einen die Brandschutzeigenschaften des Flächengebildes und zum anderen die akustische Dämpfung des Flächengebildes zu verbessern.

Während des Aushärtens des Epoxydharz-Schaumes und aufgrund der Dehnungseigenschaften des Gewebes, kann das Flächengebilde mittels Werkzeugformen in eine beliebige Kontur überführt sein, so dass das Flächengebilde auch als Verkleidung für Rohre, Gehäuse oder sonstige dreidimensionale Körper eingesetzt werden kann, um diese Bauteile gegen Feuer und Hitze zu schützen bzw. ein übergreifen von möglichen Bränden aus diesen Bauteilen in die Umgebung zu verhindern.

Durch das erfindungsgemäße Herstellungsverfahren zur Erzeugung eines derartigen Flächengebildes, das durch die nachfolgend ablaufenden Verfahrensschritte gekennzeichnet ist, nämlich:
a) Mischen von drei Komponenten zu einer flüssigen-cremigen Substanz,
b) Eingießen der flüssig- cremigen Substanz, in ein Formwerkzeug,
c) Auflegen eines Gewebes auf die Substanz,
d) Auftragen der Substanz, auf das eingelegte Gewebe,
e) Auffüllen des Formwerkzeuges mit der Substanz, bis dieses vollständig gefüllt ist und
f) Ruhenlassen des derart hergestellten Schichtaufbaus, bis der Verbindungsre aktionsprozess abgeschlossen ist und die Substanz zu einem Epoxydharz-Schaum ausgehärtet ist, und ein Faserverbund entsteht, oder
   Aufsetzen eines zweiten Formwerkzeuges auf das erste Formwerkzeug und Zusammenpressen der beiden Formwerkzeuge, bis das Gewebe und die Substanz zu einem Epoxydharz-Schaum aushärten, derart, dass ein Faserverbund entsteht,
und gewährleistet ist, dass die Herstellung für ein solches Feuer- oder Brandschutzelement einfach und kostengünstig bewerkstelligt ist. Mit Hilfe von Werkzeugen beispielsweise Schneidwerkzeugen, Laserstrahlen oder dergleichen kann zudem die Außenkontur des Flächengebildes beliebig ausgestaltet sein, um dieses als Brennelement in einer Maueröffnung beispielsweise als Tür, zu verwenden. Das Flächengebilde baut sehr dünn und ist gleichzeitig äußerst formstabil und weist darüber hinaus ein äußerst geringes Eigengewicht von etwa 85 Kg / m³ auf.

In der Zeichnung ist ein erfindungsgemäßes Ausführungsbeispiel eines Flächengebildes in verschiedenen Anwendungen und Ausgestaltungen dargestellt, das nachfolgend näher erläutert ist.

Im Einzelnen zeigt:
- Figur 1: ein als Brand- oder Feuerschutzelement dienendes Flächengebilde mit einem neunschichtigen Aufbau aus wechselweise angeordneten Epoxydharz-Schaum und einem Gewebe, sowie mit in dem Epoxydharz-Schaum eingebundenen Glashohlkugeln und mit zwei Deckschichten, im Schnitt,
- Figur 2: zwei der Flächengebilde gemäß Figur 1, die zueinander beabstandet sind und zwischen denen ein Freiraum gebildet ist, in dem ein Brandschutzschaum eingefüllt ist,
- Figur 3: zwei der Flächengebilde gemäß Figur 1, die voneinander beabstandet sind und einen Freiraum bilden, in dem eine Akustiksteinwolle zur Dämpfung oder Isolierung von Schallwellen vorgesehen ist,
- Figur 4: zwei der nach Figur 1 aufgebauten Flächengebilden, die halbkreisförmig gekrümmt sind und durch die ein Rohr ummantelt ist,
- Figur 5: zwei der nach Figur 1 aufgebauten Flächengebilden, die jeweils U-förmig im Querschnitt gekrümmt sind und durch die ein kastenförmiges Gehäuse verschlossen ist,
- Figur 6a: eine erste Herstellungsmöglichkeit des Flächengebildes gemäß Figur 1, mit zwei Formwerkzeugen, durch die die jeweilige Schicht des Flächengebildes mittels Druck und Temperatur zu einem Faserverbund verpresst bzw. verschmolzen ist,
- Figur 6b: eine zweite Möglichkeit eines Herstellungsverfahrens für ein Flächengebilde gemäß Figur 1, das in einem halbschalenförmigen Formwerkzeug zur Verformung angeordnet ist, in das die einzelnen Schichten aus Epoxydharz-Schaum und Gewebe eingelegt sind,
- Figur 6c: ein drittes Herstellungsverfahren zur Fertigung eines Flächengebildes gemäß Figur 1, mit zwei gegenläufigen gewellten Formwerkzeugen, in den Konturen eingearbeitet sind und deren Kontur an den Schichtaufbau des Flächengebildes übertragen ist und
- Figur 7: eine Anwendungsmöglichkeit des Flächengebildes gemäß Figur 1 als Rolltor in Durchfahrt einer Werkzeughalle, die aus einer Vielzahl von einzelnen Plattenelementen mit dem Schichtaufbau gemäß Figur 1 aufgebaut sind, und die jeweils über ein Gelenk miteinander verbunden sind.

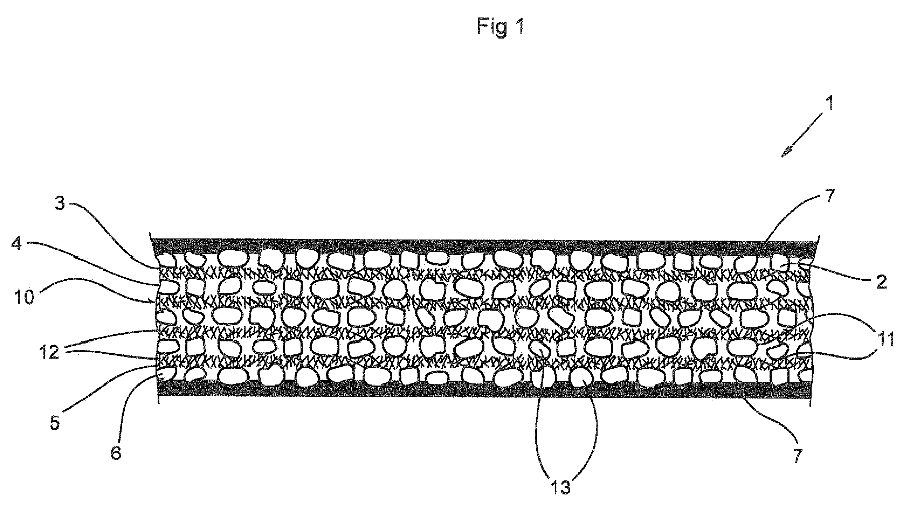

In Figur 1 ist ein als Feuer- oder Brandschutzelement einzusetzendes Flächengebilde 1 zu entnehmen, das im gezeigten Ausführungsbeispiel neun Schichten 2, 3, 4, 5, 6 aufweist, die zu einem gemeinsamen Schichtaufbau 10 fest miteinander verbunden sind, wobei zwei benachbarte Schichten 2, 3 aus einem Epoxydharz-Schaum 11 und einem Gewebe 12 gebildet sind. Somit sind die Epoxydharz-Schaum-Schichten 11 und das Gewebe 12 wechselweise zueinander angeordnet und bilden nach dem Aushärten des Epoxydharz-Schaumes 11 einen formstabilen biegesteifen Faserverbund. Die Anzahl der Schichten 2 bis 6 ist beliebig verringer- oder erhöhbar und somit ist auch die Dicke des Flächengebildes 1 an den jeweiligen Einsatzzweck durch die Anzahl der Schichten 2 bis 6 bzw. die jeweilige Dicke der Schichten 2 bis 6 frei auswählbar bzw. gestaltbar.

Es ist möglich die äußeren Schichten 2, die von dem Epoxydharz-Schaum 11 gebildet sind, mittels einer Deckschicht 7 zu verkleiden. Die Deckschicht 7 kann dabei aus einem beliebigen Werkstoff, beispielsweise Metall, Kunststoff, Gummi oder dergleichen bzw. einem Gemisch auf bekannte Werkstoffe hergestellt sein.

Üblicherweise wird der Epoxydharz-Schaum 11 aus drei Komponenten, nämlich dem Epoxydharz, einem Härter und einem Treibmittel, gebildet, die zusammengemischt sind und zunächst eine cremig flüssige Substanz bilden.

Um die brand- bzw. feuerschutzhemmende Wirkung des Flächengebildes 1 zu erhöhen, ist in die cremig flüssige Substanz des Epoxydharzes 11 eine Vielzahl von Glashohlkugeln 13 eingelegt, die auch als sogenannte Pyrobubbles bezeichnet sind.

Das Gewebe 12 besteht aus Carbon-, Kohle- oder Glasfasern, Aramid, Hybrid und/ oder Brenyl. Folglich weist das Gewebe 12 im ursprünglichen Zustand, senkrecht zueinander verlaufende Fäden auf, zwischen denen ein gewisser Abstand vorhanden ist, so dass die flüssig cremige Substanz die einzelnen Fasern des Gewebes 12 ummanteln, sobald das Gewebe 12 auf die cremig flüssige Substanz des Epoxydharz-Schaumes 11 aufgelegt ist. Zur Erhöhung der Brandschutzhemmung kann das Gewebe 12 mittels eines Feuerschutzmittels imprägniert sein.

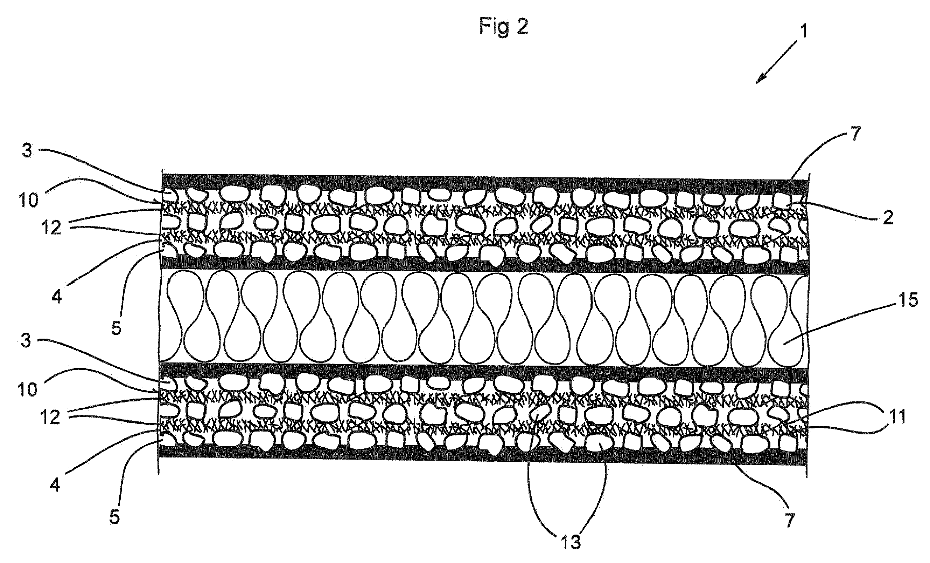

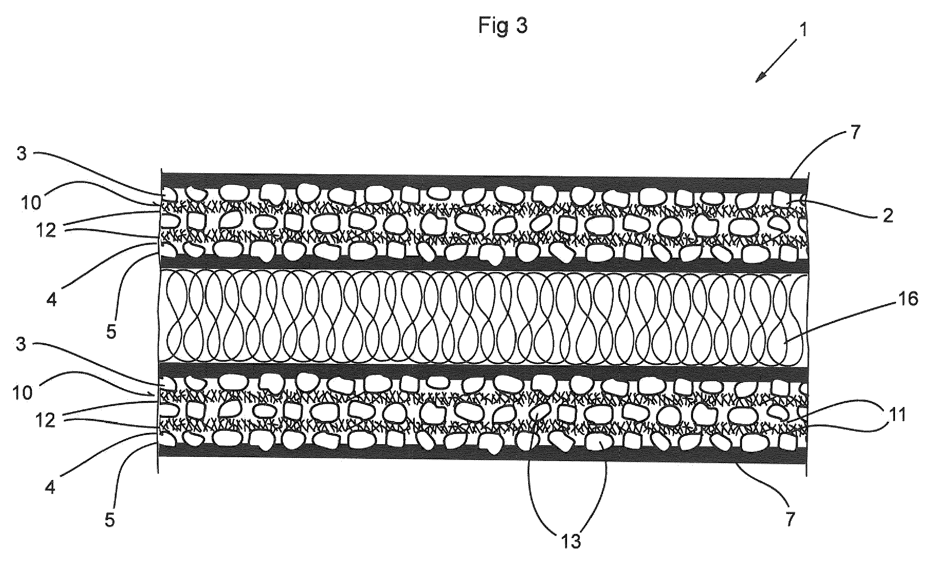

Das Flächengebilde 1 gemäß Figur 1 weist eine ebene Struktur auf. Aus Figur 2 ist ersichtlich, dass zwei derartige Flächengebilde 1 zueinander beabstandet werden können, so dass zwischen diesen ein Freiraum 14 entsteht. Die beiden benachbarten Flächengebilde 1 verlaufen demnach parallel zueinander. In den Freiraum 14 ist ein Brandschutzschaum 15 eingefüllt. Gemäß Figur 3 kann der Freiraum 14 auch mit einer Akustiksteinwolle 16 ausgekleidet sein oder der Brandschutzschaum 15 und die Akustiksteinwolle 16 sind gemeinsam in dem Freiraum 14 angeordnet. Mittels des Brandschaumes 15 soll die brandschutzhemmende Wirkung des Flächengebildes 1 gesteigert sein; wohingegen durch die Akustiksteinwolle 16 das Flächengebilde 1 gegen Schallwellen isoliert bzw. gedämpft sein soll.

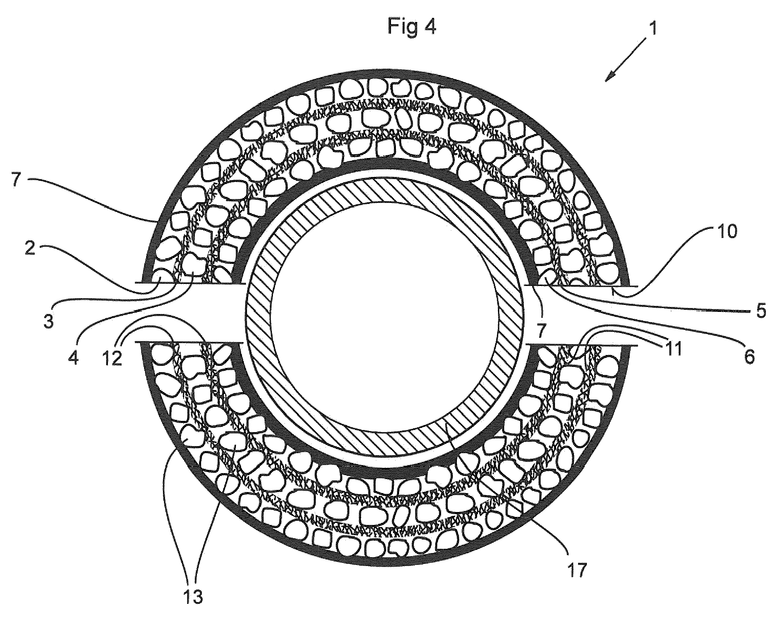

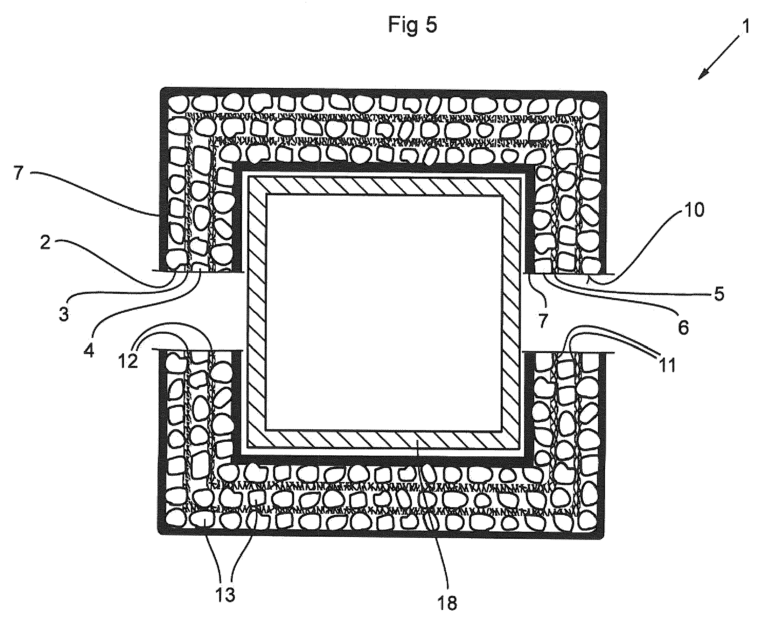

In den Figuren 4 und 5 ist gezeigt, dass das Flächengebilde 1 halbkreis- oder U-förmig im Querschnitt ausgestaltet sein kann, um gemäß Figur 4 ein Rohr 17 zu ummanteln bzw. ein Gehäuse 18 gemäß Figur 5, zu umschließen. Beispielsweise können in dem Rohr 17 oder in dem Gehäuse 18 Flüssigkeiten oder Bauteile vorhanden sein, die gegen Feuer besonders zu sichern sind, um ein Ausbreiten von Bränden zu verhindern. In dem Gehäuse 18 können auch Reaktionen stattfinden, die zu einem Kurzschluss oder dergleichen führen können und somit nach aussen aus feuerschutzrechtlichen Bestimmungen, abzuschirmen sind.

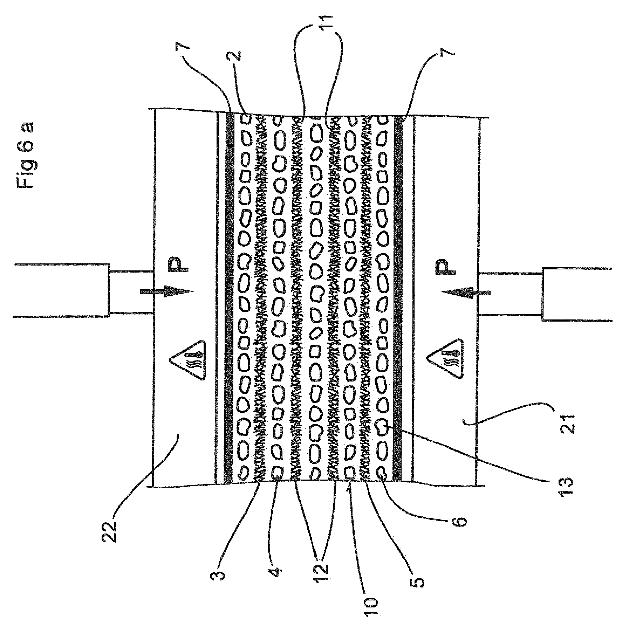

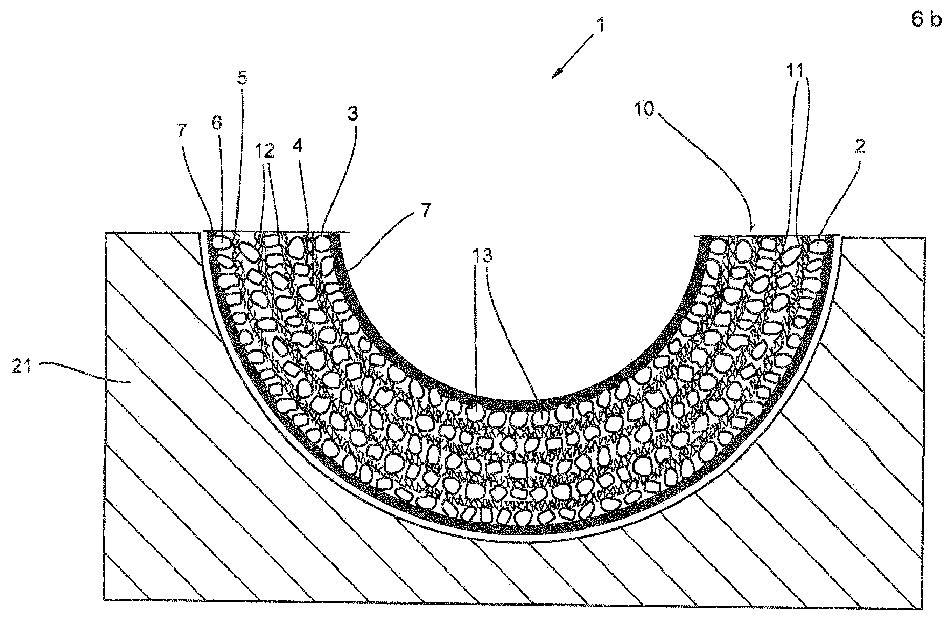

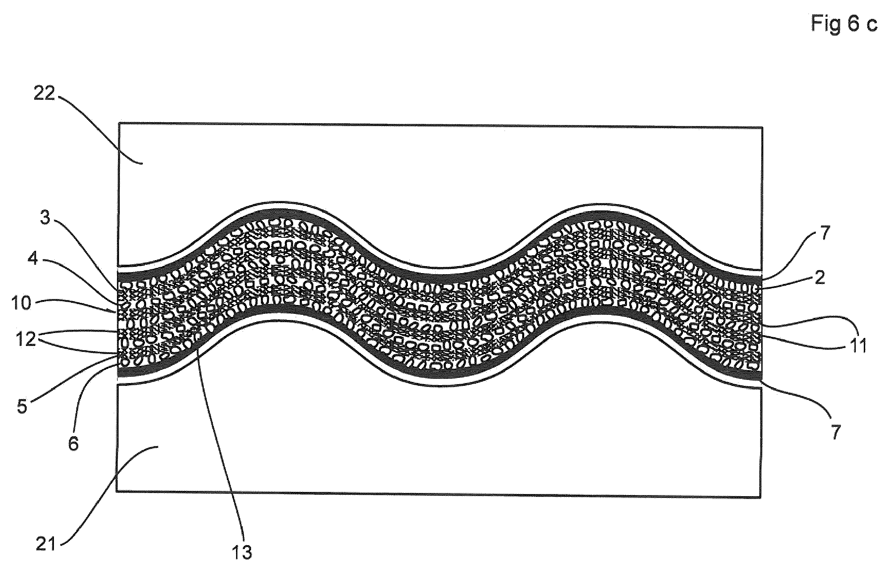

In den Figuren 6a, 6b und 6c sind drei unterschiedliche Möglichkeiten zur Herstellung eines Flächengebildes 1 zu entnehmen. Dabei ist in Figur 6a schematisch gezeigt, dass das Flächengebilde 1 zwischen einem unteren und einem oberen Formwerkzeug 21 bzw. 22 angeordnet ist, durch das ein bestimmter Anpressdruck und/oder eine Temperaturerhöhung in die einzelnen Schichten 2 bis 6 des Flächengebildes 1 einwirken. Die Herstellung des Flächengebildes 1 erfolgt dabei schrittweise derart, dass zunächst auf das untere Formwerkzeug 21, ein Trennmittel 23 aufgetragen wird, um das im Faserverbund gefertigte Flächengebilde 1 aus dem Formwerkzeug 21 nach Abschluss des Fertigungsprozesses entnehmen zu können.

Auf das Trennmittel 23 wird die cremig flüssige Substanz aus dem Epoxydharz, einem Härter und einem Treibmittel, aufgetragen. In diese flüssig cremige Substanz können eine Vielzahl von Glashohlkugeln 13 eingesetzt werden, die nach dem Aushärten der cremig flüssigen Substanz in die Epoxydharz-Schaum-Schicht 11 eingebunden sind. Auf die cremig flüssige Substanz wird das Gewebe 12 aufgelegt. Diese wechselweise Anordnung des Epoxydharz-Schaumes 11 und Gewebe 12 wird solange wiederholt, bis die gewünschte Anzahl von Schichten 2 bis 6 und folglich die Dicke des Flächengebildes 1, erreicht ist. Die beiden äußeren Schichten 2 sind dabei aus dem Epoxydharz-Schaum 11 hergestellt.

Um Hohlräume und sonstige Luftblasen in dem noch nicht ausgehärteten Schichtaufbau 10 zu verschließen, wird das untere Formwerkzeug 21 mit der cremig flüssigen Substanz aus dem Epoxydharz, dem Härter und dem Treibmittel aufgefüllt. Nach dem Auffüllen wird das obere Formwerkzeug 22 aufgesetzt und zwischen den Formwerkzeugen 21, 22 kann ein entsprechender Anpressdruck und eine vorgegebene Hitze erzeugt sein, um den Aushärtverbindungsprozess zwischen der cremig flüssigen Substanz und dem Gewebe zu beschleunigen bzw. zu verfestigen. Durch den Anpressdruck und die eingestellte Temperatur wird nämlich die cremig flüssige Substanz 11 und das Gewebe 12 miteinander verbunden, so dass nach dem Aushärten der cremig flüssigen Substanz 11 ein Faserverbund zwischen dem Epoxydharz-Schaum 11 und dem Gewebe 12 hergestellt ist.

In Figur 6b ist lediglich ein unteres Formwerkzeug 21 vorzusehen, das beispielsweise eine halbkreisförmige Querschnittskontur aufweist, um einen der zweiteiligen Rohrumhüllungen gemäß Figur 4 zu produzieren. Dabei ist zu berücksichtigen, dass die cremig flüssige Substanz, die nach dem Aushärten als Epoxydharz-Schaum 11 bezeichnet ist, zunächst eine gewisse Flieseigenschaft aufweist, so dass diese nicht in unterschiedlichen Höhenniveaus aufgetragen sein kann. Somit wird zunächst das Flächengebilde 1 gemäß Figur 1 hergestellt und anschließend wird dieses in eine Halbschale als Formwerkzeug 21 eingelegt, um beispielsweise mittels Druck und/oder Temperatur, also Erwärmung, in das Formwerkzeug 21 eingedrückt, solange bis das Flächengebilde 1 die gewünschte halbkreisförmige Querschnittsform aufweist.

In Figur 6c ist gezeigt, dass das bereits plattenförmig produzierte Flächengebilde 1 in ein Presswerkzeug mit zwei Formwerkzeugen 21, 22 eingesetzt ist, die eine gewellte, gegenläufig zueinander verlaufende Struktur aufweisen. Somit wird die gewellte Struktur der Formwerkzeuge 21, 22 an das Flächengebilde 1 mittels Druck und/oder Temperaturerwärmung übertragen.

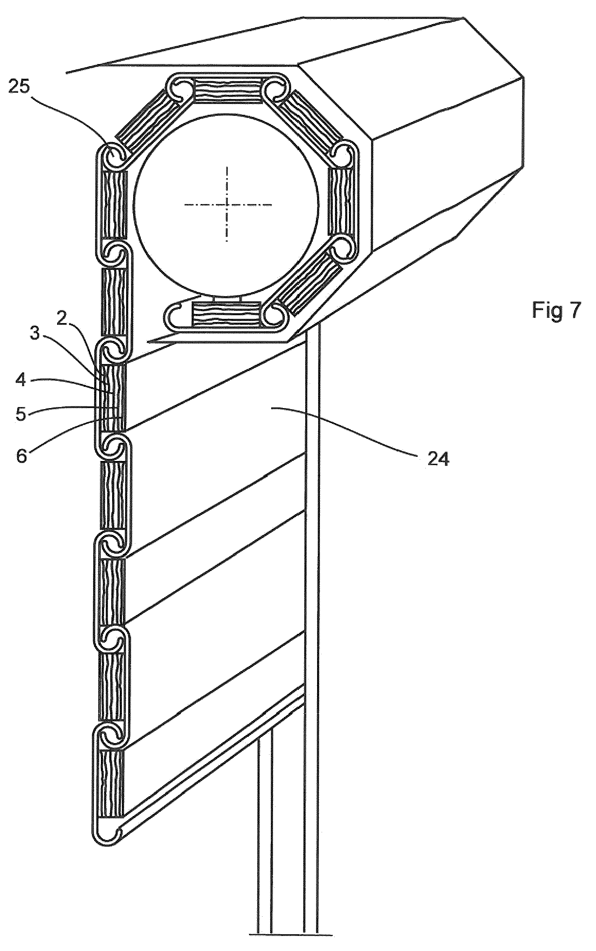

Beispielhaft kann Figur 7 entnommen werden, welche Anwendung das Flächengebilde 1 eingesetzt werden kann. Es ist hier gezeigt, dass eine Vielzahl von Flächengebilde 1 mittels eines Gelenkes 25 verschwenkbar miteinander verbunden sind, um beispielsweise ein Rolltor für eine Garagen- oder Berghalleneinfahrt zur Verfügung zu stellen. Es ist jedoch ohne weiteres denkbar, das Flächengebilde 1 auch als Wand-, Boden-, oder Deckenverkleidungselement mit feuer- bzw. brandschutzhemmenden Eigenschaften einzusetzen. Darüber hinaus kann das Flächengebilde 1 auch als Tür an einer Maueröffnung drehbar angelenkt sein.

12. September 2016

A 2007 EP ve-ae

## Patentansprüche

1. Flächengebilde (1), das mindestens drei Schichten (2, 3, 4, 5, 6) aufweist, die fest miteinander zu einem Schichtaufbau (10) verbunden sind,
**dadurch gekennzeichnet,**
**dass** der Schichtaufbau (10) abwechselnd aus einem ausgehärteten EpoxydharzSchaum (11) und einem Gewebe (12) besteht, das mit dem Epoxydharz-Schaum (11) einen Faserverbund bildet bzw. während des Aushärtens der Epoxydharz-Schaum-Schicht (11) eingeht, und dass der Schichtaufbau (10) einen Sandwich-Leichtbau aufweist, der als Feuer- oder Brandschutz geeignet ist.

2. Flächengebildet nach Anspruch 1,
**dadurch gekennzeichnet,**
**dass** die jeweilige Epoxydharz-Schaum-Schicht (11) aus drei Komponenten zusammengesetzt ist, vorzugsweise aus Epoxydharz, einem Härter und einem Treibmittel, die vor dem Aushärten eine cremig-flüssige Substanz bilden.

3. Flächengebildet nach Anspruch 1 oder 2,
**dadurch gekennzeichnet,**
**dass** der Schichtaufbau (10) eine Vielzahl von Schichten (2, 3, 4, 5, 6) aufweist, die wechselnd aus dem Epoxyd-Schaum (11) und dem Gewebe (12) bestehen.

4. Flächengebilde nach einem der vorgenannten Ansprüche,
**dadurch gekennzeichnet,**
**dass** in mindestens einem der Epoxydharz-Schaum-Schichten (11) eine Vielzahl von Glashohl-Kugeln (13) als feuerhemmendes Element angeordnet sind.

5. Flächengebilde nach einem der vorgenannten Ansprüche,
**dadurch gekennzeichnet,**
**dass** das Gewebe (12) mit einem Feuerschutzmittel imprägniert ist.

6. Flächengebilde nach einem der vorgenannten Ansprüche,
**dadurch gekennzeichnet,**
**dass** zwei Schichtaufbauten (10) beabstandet zueinander geordnet sind, zwischen deren ein Freiraum (14) vorhanden ist, und dass in dem Freiraum (14) ein Brandschutzschaum (15) und/oder eine Akustiksteinwolle (16) angeordnet ist bzw. sind.

7. Flächengebilde nach einem der vorgenannten Ansprüche,
**dadurch gekennzeichnet,**
**dass** das Flächengebilde (1) halbkreis-, U-förmig, eben oder gewellt ausgestattet oder an eine Außenkontur bzw. Innenkontur eines dreidimensionalen Körpers angepasst ist.

8. Verfahren zur Herstellung eines Flächengebildes (1) in Sandwich-Leichtbauweise mit mindestens drei Schichten (2, 3, 4, 5, 6) zu einem festen Schichtaufbau (10), insbesondere eines Flächengebildes (1) nach einem der vorgenannten Ansprüche,
**gekennzeichnet durch** die nachfolgend ablaufenden Verfahrensschritte:
a) Mischen von drei Komponenten zu einer flüssigen-cremigen Substanz,
b) Eingießen der flüssig- cremigen Substanz, in ein Formwerkzeug (21),
c) Auflegen eines Gewebes (12) auf die Substanz,
d) Auftragen der Substanz, auf das eingelegte Gewebe (12),
e) Auffüllen des Formwerkzeuges (21) mit der Substanz, bis dieses vollständig gefüllt ist und
f) Ruhenlassen des derart hergestellten Schichtaufbaus (10), bis der Verbindungsreaktionsprozess abgeschlossen ist und die Substanz zu einem Epoxydharz-Schaum (11) ausgehärtet ist, und ein Faserverbund entsteht, oder Aufsetzen eines zweiten Formwerkzeuges (22) auf das erste Formwerkzeug (21) und Zusammenpressen der beiden Formwerkzeuge (21, 22), bis das Gewebe (12) und die Substanz zu einem Epoxysharz-Schaum (11) aushärtet, derart, dass ein Faserverbund entsteht.

9. Verfahren nach Anspruch 8,
**dadurch gekennzeichnet,**
**dass** zwischen dem Formwerkzeug (21) und der ersten Lage in diese eingefüllte Substanz ein Trennmittel (23) aufgetragen oder eingelegt ist.

10. Verfahren nach Anspruch 8 oder 9,
**dadurch gekennzeichnet,**
**dass** auf das erste aufgefüllte Formwerkzeug (21) ein zweites Formwerkzeug (22) aufgesetzt ist, dass die eingefüllten Substanzen und das Gewebe (12) mittels des Druckes zwischen den beiden Formwerkzeugen (21, 22) in eine vorgegebene Kontur, die beispielsweise rund, eben, halbkreis-, U-förmig oder gewellt ist, überführt ist.

11. Verfahren nach Anspruch 8, 9 oder 10,
**dadurch gekennzeichnet,**
**dass** das Gewebe (12) vor dem Einlegen in das Formwerkzeug (21) mit einem Feuerschutzmittel imprägniert ist.

12. Flächengebilde oder Verfahren nach einem der vorgenannten Ansprüche,
**dadurch gekennzeichnet,**
**dass** auf die Oberflächen des Flächengebildes (1) mindestens eine Deckschicht (7) aufgetragen oder angebracht ist.

13. Flächengebilde oder Verfahren nach einem der vorgenannten Ansprüche,
**dadurch gekennzeichnet,**
**dass** das Gewebe (12) aus Carbon-, Kohle-, Glasfasern, Aramid, Hybrid und/oder Brenyl besteht.
